# EUROPEAN PATENT APPLICATION

(11) **EP 2 735 941 A2**
(43) Date of publication of application: **28.05.2014**
(21) Application number: 13188759.8
(22) Date of filing: 15.10.2013
(51) Int. Cl.: G06F 3/0354

(54) **Touch-sensitive display device and method for fabricating the same**

(30) Priority: 16.10.2012 TW 101138018
(71) Applicant: Wintek Corporation, 42760 Taichung City (TW)
(72) Inventor: Huang, Hieng, Hsiung, HSIN CHU CITY (TW); Zhang, Ming-Chun, TAI CHUNG CITY (TW); Jian, Ming-Sin, TAI CHUNG COUNTY (TW); Su, Kuo-Chang, TAI NAN COUNTY (TW); Teng, Chih-Jung, TAI CHUNG CITY (TW)
(74) Representative: Becker Kurig Straus

(57) **Abstract**

A touch-sensitive display device includes a touch-sensitive device, a display device, and an adhesive layer. The display device is disposed on a side of the touch-sensitive device, and the adhesive layer is disposed between the touch-sensitive device and the display device to combine the touch-sensitive device with the display device. A distribution area of the adhesive layer at least overlaps a viewing area of the touch-sensitive display device.

## Description

### BACKGROUND OF THE INVENTION

### a. Field of the Invention

The invention relates to a touch-sensitive display device and a method for fabricating the touch-sensitive display device.

### b. Description of the Related Art

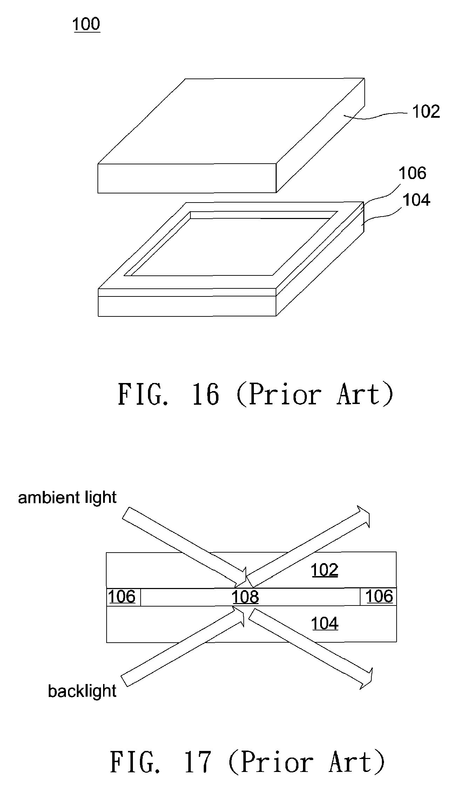

FIG. 16 shows an exploded diagram of a conventional touch-sensitive display device. Referring to FIG. 16, touch-sensitive display device 100 includes touch panel 102 and display panel 104. During the assembly of touch-sensitive display device 100, enclosed sealant 106 is formed on display panel 104 by screen printing, and touch panel 102 is attached to display panel 104 by sealant 106.

Typically, when light travels from a medium with a higher refractive index to a medium with a lower refractive index and an angle of incidence is greater than the critical angle, an optical phenomenon of total reflection occurs. Referring to FIG. 17, when touch panel 102 and display panel 104 are combined with each other, air gap 108 is formed between touch panel 102 and display panel 104 and surrounded by sealant 106. In case a substrate of touch panel 102 is a glass substrate, and ambient light that travels from the glass substrate (refractive index equal to about 1.5) to air gap 108 (refractive index equal to about 1) has an angle of incidence larger than the critical angle, total reflection may occur. Under the circumstance, glare is shone on a surface of touch panel 102 to cause visual discomfort. Besides, backlight that travels from a glass substrate to air gap 108 and has an angle of incidence larger than the critical angle may be totally reflected to reduce the utilization efficiency of backlight.

### BRIEF SUMMARY OF THE INVENTION

The invention provides a touch-sensitive display device and its fabrication method having at least one advantage of reduced glare, high light-utilization efficiency, improved lamination yields, and simplified alignment during assembly.

According to an embodiment of the invention, a touch-sensitive display device includes a touch-sensitive device, a display device, and an adhesive layer. The display device is disposed on a side of the touch-sensitive device, and the adhesive layer is disposed between the touch-sensitive device and the display device to combine the touch-sensitive device with the display device. A distribution area of the adhesive layer at least overlaps a viewing area of the touch-sensitive display device.

In one embodiment, the touch-sensitive device has at least one first alignment mark, the display device has at least one second alignment mark, and a position of the second alignment mark corresponds to a position of the first alignment mark.

In one embodiment, the touch-sensitive device includes a substrate, a touch-sensing unit disposed on the substrate, and a decorative layer disposed on the substrate.

In one embodiment, the substrate is a cover glass, the decorative layer is disposed on a periphery of the cover glass, and at least a part of the touch-sensing unit is disposed on the decorative layer.

In one embodiment, a cover glass is attached to the substrate or the touch-sensing unit.

In one embodiment, the first alignment mark is disposed on the decorative layer.

In one embodiment, a plurality of traces are disposed on the decorative layer for electrically connecting the touch-sensing unit with an external circuit, and the traces are formed by the same fabrication process as the first alignment mark.

In one embodiment, the touch-sensing unit comprises a single-layer electrode structure or a multi-layer electrode structure.

In one embodiment, the first alignment mark is a ground line.

In one embodiment, the decorative layer includes at least one of diamond-like carbon, ceramic, colored ink, resin and photo resist.

In one embodiment, the display device includes a display unit and a housing for securing the display unit. The second alignment mark may be disposed on the housing, and the second alignment mark and the housing may be integrally formed as one piece. A bezel may be disposed outside the housing to secure the housing.

In one embodiment, the display unit is a liquid crystal display, an organic electroluminescence display, an electrowetting display, a bi-stable display, or an electrophoretic display.

In one embodiment, the second alignment mark is a side edge of the display unit or a side edge of the housing.

In one embodiment, a backlight module is disposed on a side of the display unit facing away from the touch-sensitive device.

In one embodiment, the display unit includes an array substrate, a color filter substrate disposed opposite the array substrate, and a liquid crystal layer interposed between the array substrate and the color filter substrate. The second alignment mark may be disposed on at least one of the array substrate and the color filter substrate.

In one embodiment, the display unit is fully laminated to the touch-sensitive device by the adhesive layer.

In one embodiment, each of the first alignment mark and the second alignment mark is a bump structure or a notch structure.

In one embodiment, a sheltering layer is disposed on a periphery of the touch-sensitive device, and an opening is formed on the sheltering layer at a position overlapping the first alignment mark.

In one embodiment, a sealant is disposed between the touch-sensitive device and the display device and surrounds the adhesive layer.

According to another embodiment of the invention, a method for fabricating a touch-sensitive display device including the steps of: fully laminating a touch-sensitive device and a display unit together to form a combined piece; testing the combined piece to check whether the combined piece is non-defective; and integrating a non-defective combined piece with a backlight module.

According to another embodiment of the invention, a touch-sensitive display device includes a touch-sensitive device, a display device, and an adhesive layer. The display device is disposed on a side of the touch-sensitive device and includes a display unit and a housing. The display unit has an array substrate, a color filter substrate disposed opposite the array substrate, and a liquid crystal layer interposed between the array substrate and the color filter substrate. The housing for securing the display unit has at least one first alignment mark. At least one of the array substrate and the color filter substrate has at least one second alignment mark, and a position of the second alignment mark corresponds to a position of the first alignment mark. The adhesive layer is disposed between the touch-sensitive device and the display device to combine the touch-sensitive device with the display device. A distribution area of the adhesive layer at least overlaps a viewing area of the touch-sensitive display device.

According to the above embodiments, a gap in the viewing area of a touch-sensitive display device is filled by an adhesive layer to avoid the phenomenon of total internal reflection of light due to different refractive indexes of medias to prevent the formation of glare and increase the light utilization efficiency. Besides, the adhesive layer may spread over a comparatively larger area to enhance the lamination strength between a touch-sensitive device and a display unit and thus improve production yields. Further, the touch-sensitive device and the display unit may be fully laminated together and tested. Therefore, if testing reveals any defect on the display unit, the defective display unit may be repaired or discarded before being combined with the backlight module. In that case, a non-defective backlight module is not discarded along with a defective display unit, and a rework process may be applied to replace a defective display unit with a new one to be combined with a backlight module and other components. This may simplify rework operations and save costs. Moreover, the arrangement of alignment marks according to the above embodiments may simplify alignment processes during the assembly of a touch-sensitive display device.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 shows a schematic diagram of a touch-sensitive display device according to an embodiment of the invention.

FIG. 2A shows a schematic diagram of a touch-sensitive display device according to another embodiment of the invention, and FIG. 2B shows a partial enlarged diagram of the touch-sensitive display device shown in FIG. 2A.

FIG. 3 shows a partial diagram of a touch-sensitive display device according to another embodiment of the invention.

FIG. 4 shows a schematic diagram of a touch-sensitive display device according to another embodiment of the invention.

FIG. 5 shows a partial diagram of a touch-sensitive display device according to another embodiment of the invention.

FIG. 6 shows a schematic diagram of a touch-sensitive display device according to another embodiment of the invention.

FIG. 7 shows a schematic diagram of a touch-sensitive display device according to another embodiment of the invention.

FIG. 8 shows a partial diagram of a touch-sensitive display device according to another embodiment of the invention.

FIG. 9 shows a schematic diagram illustrating different shape embodiments of alignment marks.

FIG. 10 shows a schematic diagram of a touch-sensitive display device according to another embodiment of the invention.

FIG. 11 shows a schematic diagram of a touch-sensitive display device according to another embodiment of the invention.

FIG. 12 shows a partial diagram of a touch-sensitive display device according to another embodiment of the invention.

FIG. 13 shows a schematic diagram of a touch-sensitive display device according to another embodiment of the invention.

FIG. 14 shows a schematic diagram of a touch-sensitive display device according to another embodiment of the invention.

FIG. 15 shows a schematic diagram of a touch-sensitive display device according to another embodiment of the invention.

FIG. 16 shows an exploded diagram of a conventional touch-sensitive display device.

FIG. 17 shows a schematic diagram of an assembled conventional touch-sensitive display device.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

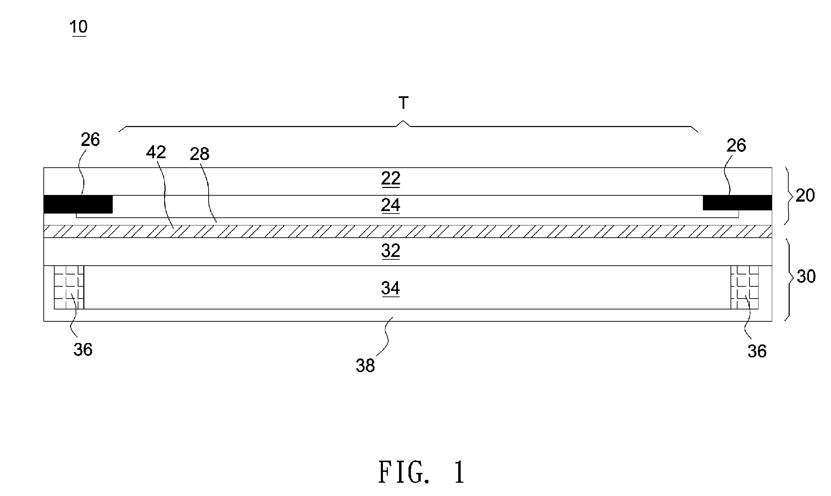

FIG. 1 shows a schematic diagram of a touch-sensitive display device according to an embodiment of the invention. Referring to FIG. 1, touch-sensitive display device 10 includes touch-sensitive device 20 and display device 30 that are attached to each other by adhesive layer 42. In this embodiment, touch-sensitive device 20 may include cover glass 22, touch-sensing unit 24, decorative layer 26 and passivation layer 28, and touch-sensing unit 24, decorative layer 26 and passivation layer 28 are disposed on cover glass 22. Touch-sensing unit 24 and decorative layer 26 may be disposed on a side of cover glass 22 facing display device 30, decorative layer 26 may be disposed on a periphery of cover glass 22, and passivation layer 28 may cover touch-sensing unit 24 and decorative layer 26. Cover glass 22 may be formed from any suitable material including, but not limited to, a glass substrate, a glass film, a plastic substrate, a plastic film, and so forth. The material of decorative layer 26 may include at least one of diamond-like carbon, ceramic, colored ink, resin and photo resist. Display device 30 includes at least one display unit 32 and backlight module 34, and backlight module 34 is disposed on a side of display unit 32 facing away from touch-sensitive device 20. Display unit 32 and backlight module 34 are disposed in housing 36, and bezel 38 is arranged outside housing 36 to secure housing 36. According to this embodiment, touch-sensitive device 20 and display unit 32 are fully laminated together by adhesive layer 42. Adhesive layer 42 may be, for example, an optically solid adhesive (such as a pressure-sensitive adhesive) or an optically liquid adhesive. A full lamination process may eliminate any air gap formed in adhesive layer 42 between touch-sensitive device 20 and display device 30, and a distribution area of adhesive layer 42 at least overlaps a viewing area T of touch-sensitive display device 10. Therefore, a gap in the viewing area T of touch-sensitive display device 10 is filled by adhesive layer 42 to avoid the phenomenon of total internal reflection of light due to different refractive indexes of medias to prevent the formation of glare and increase the light utilization efficiency. Besides, adhesive layer 42 in the above embodiment may spread over a comparatively larger area to enhance the lamination strength between touch-sensitive device 20 and display unit 32 and thus improve production yields. Further, in this embodiment, touch-sensitive device 20 and display unit 32 are fully laminated together and tested, and, if testing reveals no defect, such assembly is further combined with backlight module 34, housing 36 and optical components such as a polarizer (not shown). Therefore, if testing reveals any defect on display unit 32, defective display unit 32 may be repaired or discarded before being combined with backlight module 34. In that case, a non-defective backlight module is not discarded along with a defective display unit, and a rework process may be applied to replace a defective display unit with a new one to be combined with a backlight module and other components. This may simplify rework operations and save costs. In an alternate embodiment, display unit 32 and backlight module 34 may be combined with each other to form a liquid crystal display module, and touch-sensitive device 20 is fully laminated to the liquid crystal display module.

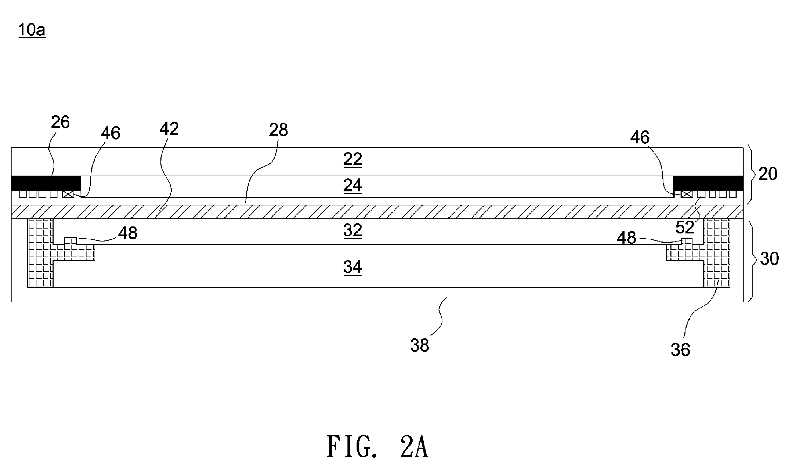

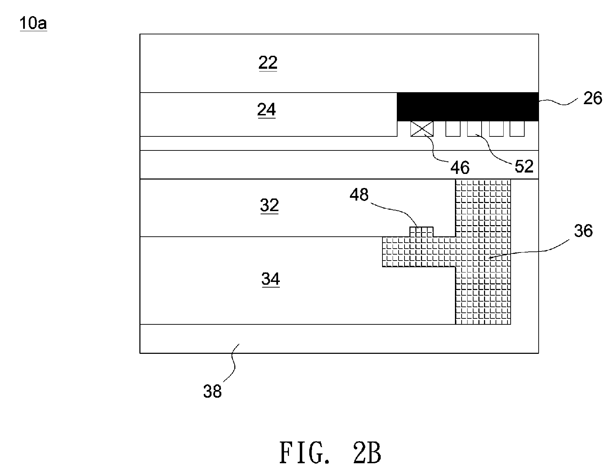

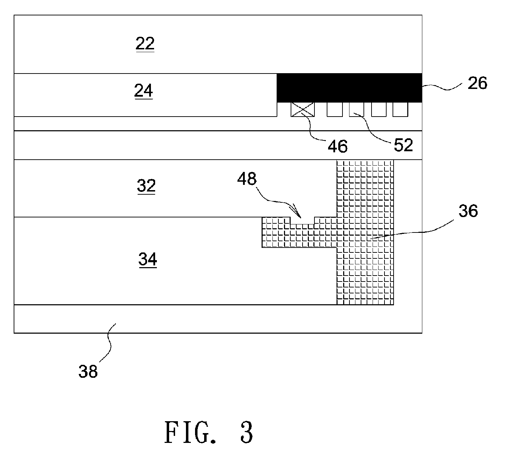

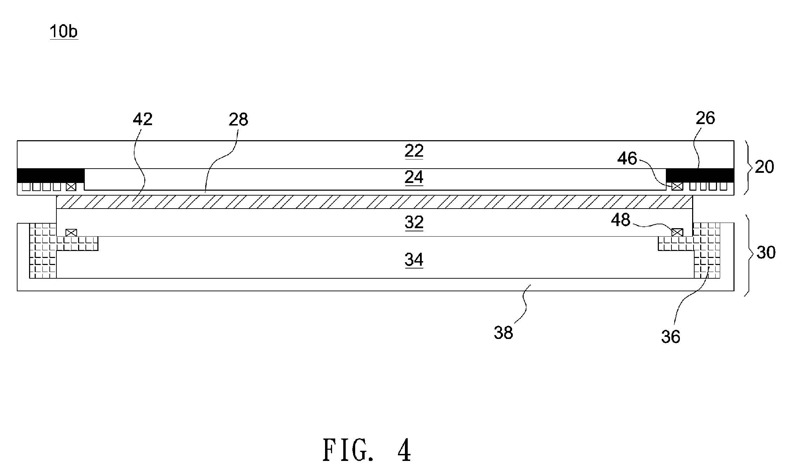

FIG. 2A shows a schematic diagram of a touch-sensitive display device according to another embodiment of the invention, and FIG. 2B shows a partial enlarged diagram of the touch-sensitive display device shown in FIG. 2A. As shown in FIG. 2A and FIG. 2B, alignment marks are provided on different components of touch-sensitive display device 10a to facilitate proper alignment of components in touch-sensitive display device 10a. In this embodiment, alignment mark 46 is disposed on decorative layer 26 of touch-sensitive device 20, and another alignment mark 48 corresponding to the position of alignment mark 46 is disposed on housing 36 that accommodates display unit 32 and backlight module 34. Touch-sensitive device 20 is fully laminated to display unit 32 by adhesive layer 42, and display unit 32 and touch-sensitive device 20 combined with each other and backlight module 34 are separately disposed on a jig. Then, alignment mark 46 and alignment mark 48 are aligned with each other using an optical pickup apparatus such as a charge coupled device (CCD), and the jig flips these aligned elements over to perform assembling processes. In this embodiment, traces 52 such as made of metal are disposed on cover glass 22 to form electrical connection between touch-sensing unit 24 and an external circuit. Alignment mark 46 may be formed by the same fabrication process as traces 52. For example, a metallic material may be disposed on decorative layer 26 and patterned to form both metal traces 52 and metal alignment mark 46. In an alternate embodiment, alignment mark 46 may be formed by a fabrication process different to that of traces 52. For example, in one embodiment, alignment mark 46 may be disposed on passivation layer 28, and traces 56 may be disposed on decorative layer 26. Alignment mark 48 and housing 36 may be integrally formed as one piece as shown in FIG. 2A, or alignment mark 48 may be separately disposed on housing 36. Further, alignment marks 46 and 48 may include a wide variety of shapes. For example, alignment mark 48 may be a bump structure (FIG. 2B) or a notch structure (FIG. 3). Besides, touch-sensing unit 24 may be disposed on a part of decorative layer 26 as shown in FIG. 1, or touch-sensing unit 24 may not be disposed on decorative layer 26 as shown in FIG. 2A. The arrangement for combining touch-sensitive device 20 with display unit 32 is not restricted. As shown in FIG. 2A, touch-sensitive device 20 may be adhered to both of display unit 32 and housing 36 by adhesive layer 42. In an alternate embodiment shown in FIG. 4, part of display unit 32 of touch-sensitive display device 10b is disposed outside housing 36, and thus touch-sensitive device 20 is adhered to display unit 32 by adhesive layer 42 but not adhered to housing 36.

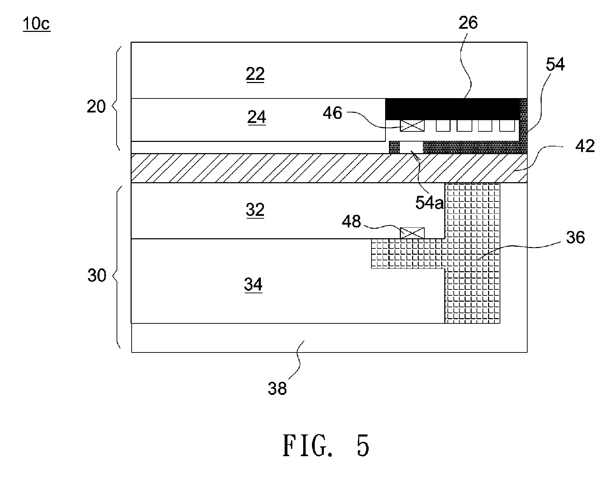

FIG. 5 shows a partial enlarged diagram of a touch-sensitive display device according to another embodiment of the invention. As shown in FIG. 5, touch-sensitive display device 10c may have sheltering layer 54 such as formed from ink. Sheltering layer 54 may be disposed on a periphery of touch-sensitive device 20 and may overlap a gap region between an outer edge of decorative layer 26 and a side edge of cover glass 22 to avoid peripheral light leakage and provide periphery protection. In this embodiment, opening 54a is formed on sheltering layer 54 at a position overlapping alignment mark 46 to allow for transmitting light, so that an alignment is achieved by alignment marks 46 and 48 during the assembly of touch-sensitive display device 10c.

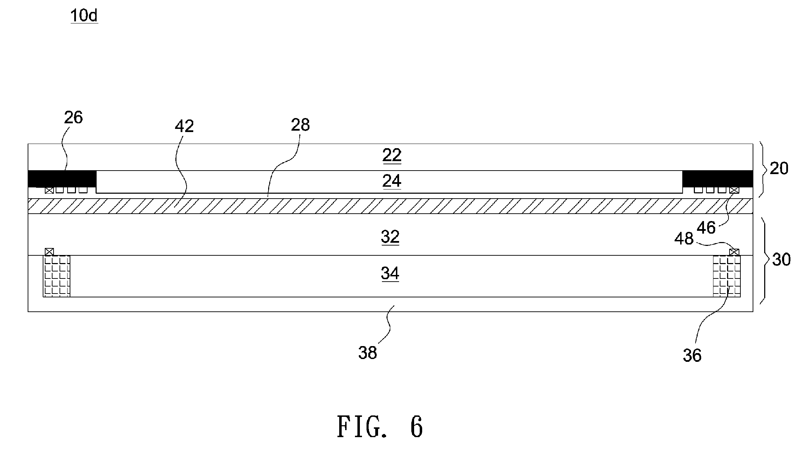

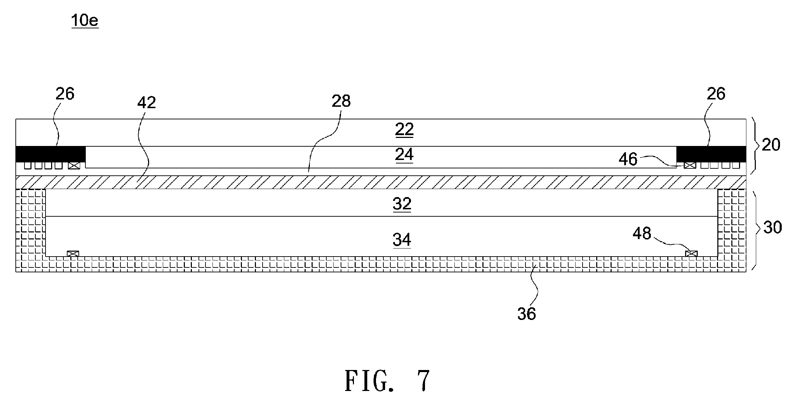

As shown in FIG. 6, in an alternate embodiment, display unit 32 of touch-sensitive display device 10d is disposed outside but secured to housing 36. Besides, as shown in FIG.7, housing 36 of touch-sensitive display device 10e may extend to also near the bottom of backlight module 34, and thus bezel 38 described in afore-mentioned embodiments is allowed to be omitted from touch-sensitive display device 10d.

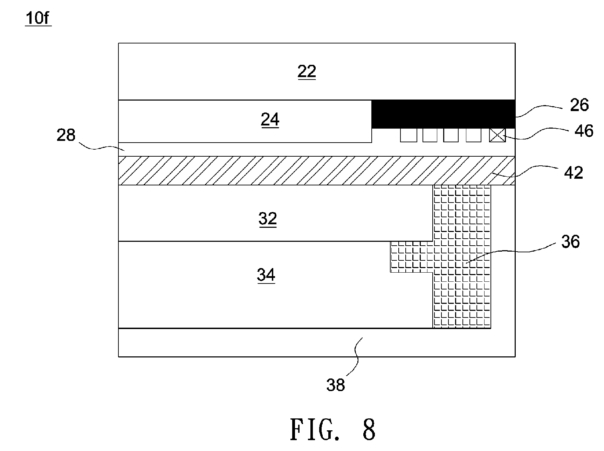

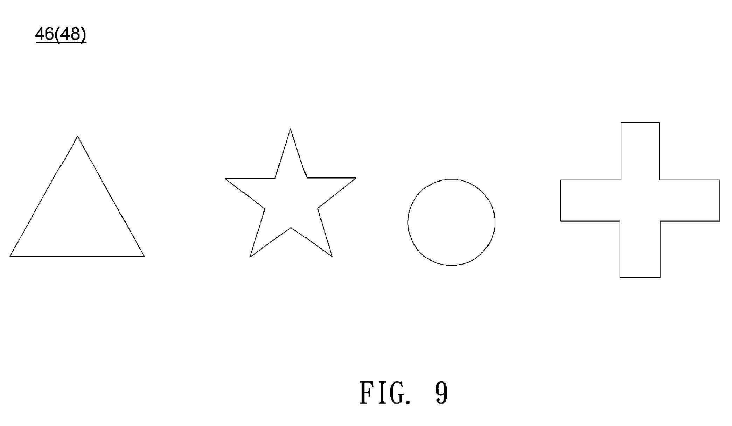

As shown in FIG. 8, in an alternate embodiment, at least one alignment mark of touch-sensitive display device 10f, such as alignment mark 46, may be a ground line to reduce signal interference existing in touch-sensing unit 24. Besides, a side edge of housing 36 or a side edge of a substrate of display unit 32 may serve as another alignment mark, such as alignment mark 48. According to the above embodiments, alignment marks 46 and 48 are not limited to a specific construction, and alignment marks 46 and 48 may be separately formed or may be an identified part of a touch-sensitive display device, as long as the alignment of touch-sensitive device 20 and display device 30 is achieved. Besides, alignment marks 46 and 48 are not limited to have a specific shape as long as they can be recognized. For example, alignment marks 46 and 48 may have a regular shape such as a triangle, a star, a circle or a cross shown in FIG. 9 or may have an irregular shape.

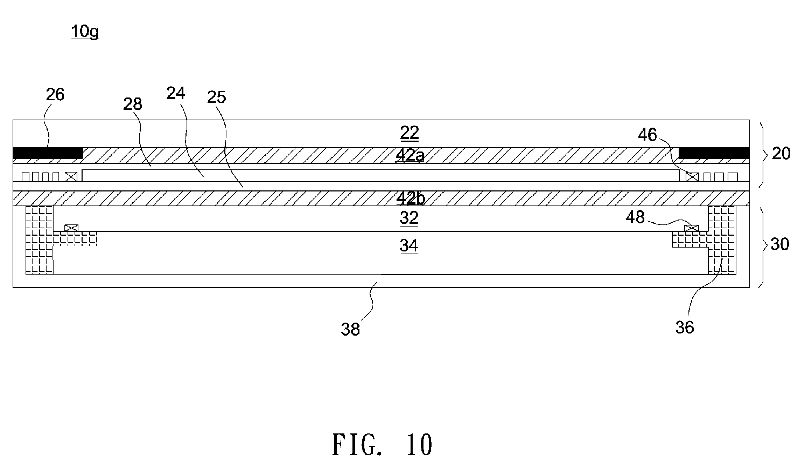

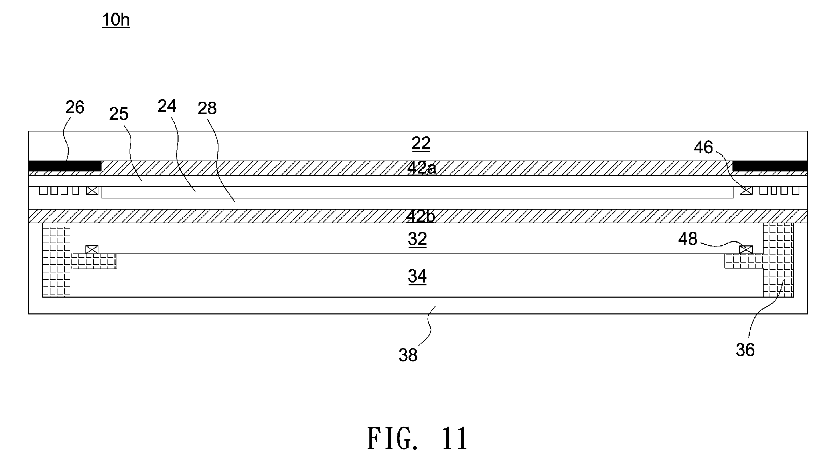

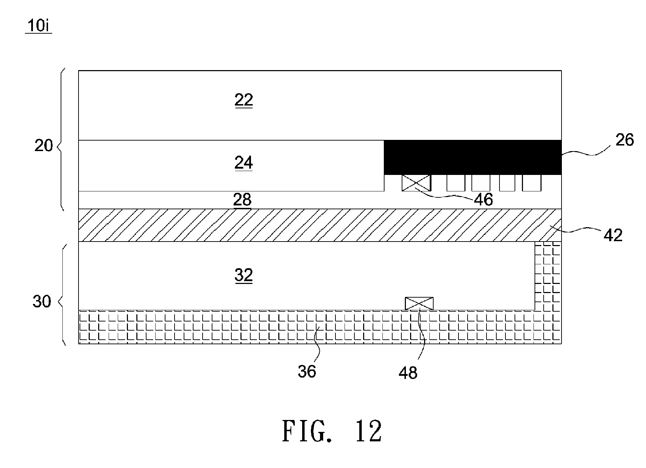

FIG. 10 shows a schematic diagram of a touch-sensitive display device according to another embodiment of the invention. Although touch-sensing unit 24 may be described in the above embodiment as being formed on cover glass 22, in other embodiments, touch-sensing unit 24 is not formed on cover glass 22. As shown in FIG. 10, in touch-sensitive display device 10g, touch-sensing unit 24 of touch-sensitive device 20 is formed on substrate 25, and substrate 25 is attached to cover glass 22 having decorative layer 26 by adhesive layer 42a. Touch-sensitive device 20 is combined with display unit 32 through adhesive layer 42b. In this embodiment, cover glass 22 and touch-sensing unit 24 are disposed on the same side of substrate 25. In an alternate embodiment shown in FIG. 11, cover glass 22 and touch-sensing unit 24 of touch-sensitive display device 10h are formed on opposite sides of substrate 25, and substrate 25 is attached to cover glass 22 having decorative layer 26 by adhesive layer 42a. It should be understood that embodiments of this invention are generally applicable to a touch-sensing unit having a single-layer or a multi-layer electrode structure. Further, touch-sensing unit 24 may be disposed on opposite sides of substrate 25 to form a double-sided ITO (DITO) substrate. The display unit 32 may include, but is not limited to, a liquid crystal display, an organic electroluminescence display, an electrowetting display, a bi-stable display, an electrophoretic display, and so forth. As shown in FIG. 12, touch-sensitive display device 10i has OLED display unit 32, alignment mark 46 is disposed on decorative layer 26, and another alignment mark 48 is disposed on housing 36. Touch-sensitive device 20 and OLED display unit 32 are aligned by using alignment marks 46 and 48 during the lamination process.

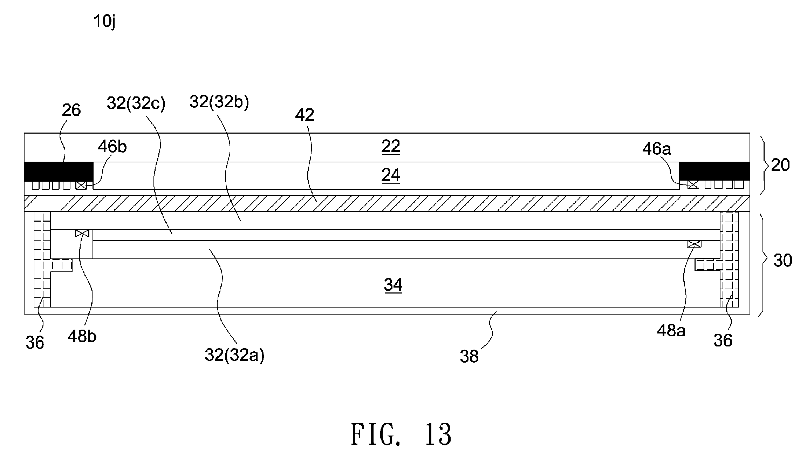

FIG. 13 shows a schematic diagram of a touch-sensitive display device according to another embodiment of the invention. As shown in FIG. 13, in touch-sensitive display device 10j, at least one of alignment marks 46a and 46b is disposed on touch-sensitive device 20, and at least one of alignment marks 48a and 48b is disposed on display unit 32 of display device 30. In this embodiment, display unit 32 includes array substrate 32a, color filter substrate 32b disposed opposite array substrate 32a, and liquid crystal layer 32c interposed between array substrate 32a and color filter substrate 32b. In this embodiment, alignment mark 48a corresponding to the position of alignment mark 46a may be disposed on array substrate 32a, and alignment mark 48b corresponding to the position of alignment mark 46b may be disposed on color filter substrate 32b to achieve the alignment of touch-sensitive device 20 and display unit 32. In an alternate embodiment, alignment mark 48b may be disposed either on color filter substrate 32b or on array substrate 32a. That is, alignment marks 48a and 48b may be disposed on both of or only one of array substrate 32a and color filter substrate 32b.

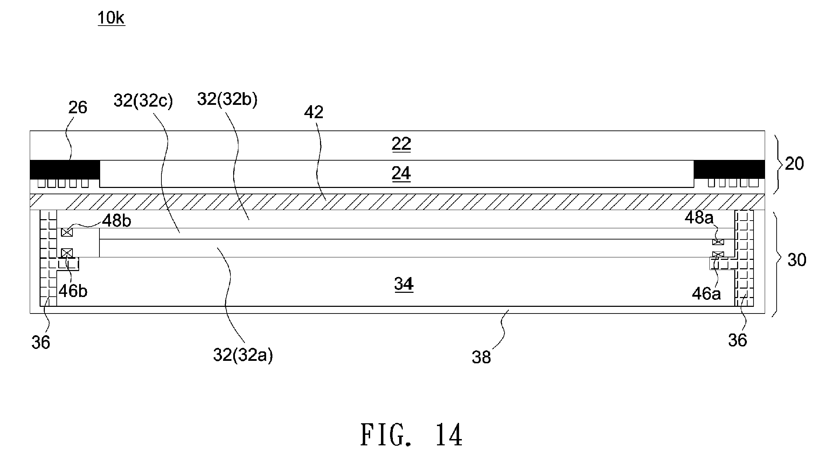

FIG. 14 shows a schematic diagram of a touch-sensitive display device according to another embodiment of the invention. As shown in FIG. 14, in touch-sensitive display device 10k, display unit 32 includes array substrate 32a, color filter substrate 32b disposed opposite array substrate 32a, and liquid crystal layer 32c interposed between array substrate 32a and color filter substrate 32b. At least one of alignment marks 46a and 46b is disposed on housing 36, and at least one of alignment marks 48a and 48b is disposed on display unit 32. In one embodiment, alignment mark 48a corresponding to the position of alignment mark 46a on housing 36 may be disposed on array substrate 32a, and the alignment of different components such as backlight module 34 and housing 36 is achieved by using alignment marks 46a and 48a after touch-sensitive device 20 and display unit 32 are fully laminated together. In an alternate embodiment, alignment mark 48b corresponding to the position of alignment mark 46a on housing 36 may be disposed on color filter substrate 32b. After touch-sensitive device 20 and display unit 32 are fully laminated together, the alignment of different components such as backlight module 34 and housing 36 is achieved by the use of alignment marks 46a and 48a. Certainly, in another embodiment, array substrate 32a may be provided with alignment mark 48a, and color filter substrate 32b may be also provided with alignment mark 48b.

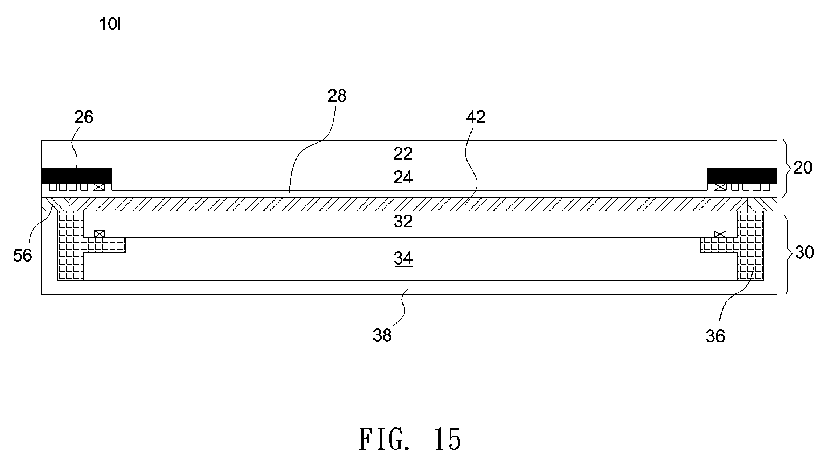

FIG. 15 shows a schematic diagram of a touch-sensitive display device according to another embodiment of the invention. As shown in FIG. 15, adhesive layer 42 of touch-sensitive display device 101 may be an optically liquid adhesive, and sealant 56 is disposed on a periphery of a bonding area between the touch-sensitive device 20 and the display device 30 (a region surrounding adhesive layer 42) to avid leakage of the optically liquid adhesive.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims. Each of the terms "first" and "second" is only a nomenclature used to modify its corresponding element. These terms are not used to set up the upper limit or lower limit of the number of elements.

## Claims

1. A touch-sensitive display device, comprising:
a touch-sensitive device;
a display device disposed on a side of the touch-sensitive device; and
an adhesive layer disposed between the touch-sensitive device and the display device to combine the touch-sensitive device with the display device, wherein a distribution area of the adhesive layer at least overlaps a viewing area of the touch-sensitive display device.

2. The touch-sensitive display device as claimed in claim 1, wherein the touch-sensitive device has at least one first alignment mark, the display device has at least one second alignment mark, and a position of the second alignment mark corresponds to a position of the first alignment mark.

3. The touch-sensitive display device as claimed in claim 2, wherein the touch-sensitive device comprises:
a cover glass;
a touch-sensing unit disposed on the cover glass; and
a decorative layer disposed on a periphery of the cover glass, wherein at least a part of the touch-sensing unit is disposed on the decorative layer.

4. The touch-sensitive display device as claimed in claim 3, wherein the first alignment mark is disposed on the decorative layer or the first alignment mark is a ground line.

5. The touch-sensitive display device as claimed in claim 3, further comprising:
a plurality of traces disposed on the decorative layer for electrically connecting the touch-sensing unit with an external circuit, wherein the traces are formed by the same fabrication process as the first alignment mark.

6. The touch-sensitive display device as claimed in claim 2, wherein the display device comprises:
a display unit; and
a housing for securing the display unit.

7. The touch-sensitive display device as claimed in claim 6, wherein the second alignment mark is disposed on the housing, or the second alignment mark and the housing are integrally formed as one piece.

8. The touch-sensitive display device as claimed in claim 6, wherein the second alignment mark is a side edge of the display unit or a side edge of the housing.

9. The touch-sensitive display device as claimed in claim 6, wherein the display unit comprises:
an array substrate;
a color filter substrate disposed opposite the array substrate; and
a liquid crystal layer interposed between the array substrate and the color filter substrate, wherein the second alignment mark is disposed on at least one of the array substrate and the color filter substrate.

10. The touch-sensitive display device as claimed in claim 6, wherein the display unit is fully laminated to the touch-sensitive device by the adhesive layer.

11. The touch-sensitive display device as claimed in claim 2, wherein each of the first alignment mark and the second alignment mark is a bump structure or a notch structure.

12. The touch-sensitive display device as claimed in claim 2, further comprising:
a sheltering layer disposed on a periphery of the touch-sensitive device, wherein an opening is formed on the sheltering layer at a position overlapping the first alignment mark.

13. The touch-sensitive display device as claimed in claim 1, further comprising:
a sealant disposed between the touch-sensitive device and the display device and surrounding the adhesive layer.

14. A method for fabricating a touch-sensitive display device, comprising the steps of:
fully laminating a touch-sensitive device and a display unit together to form a combined piece;
testing the combined piece to check whether the combined piece is non-defective;
and
integrating a non-defective combined piece with a backlight module.

15. The fabrication method as claimed in claim 14, further comprising:
forming at least one alignment mark on at least one of the touch-sensitive device, the display unit and the backlight module, wherein the backlight module is assembled to the non-defective combined piece through the alignment of the alignment mark.
